# EUROPÄISCHE PATENTANMELDUNG

(11) **EP 4 230 334 A1**
(43) Veröffentlichungstag der Anmeldung: **23.08.2023**
(21) Anmeldenummer: 22157389.2
(22) Anmeldetag: 18.02.2022
(51) Int. Cl.: B23G 5/18, B23B 51/02, B23B 51/08

(54) **BOHRGEWINDEFRÄSER**

(71) Anmelder: KOMET Deutschland GmbH, 74354 Besigheim (DE)
(72) Erfinder: DURST, Gabriele, 74354 Besigheim (DE); HEIDUSCH, Wolfgang, 74354 Besigheim (DE)
(74) Vertreter: Ciesla, Dirk

(57) **Zusammenfassung**

Bohrgewindefräser (1), der entlang von einer Drehachse (2) erstreckt ist und einen Gewindefräsabschnitt (3) sowie eine an den Gewindefräsabschnitt (3) anschließende Bohrspitze (4) hat, wobei der Gewindefräsabschnitt (3) drei Spannuten (5) und zumindest einen Gewindefräszahn (6) hat, wobei die Bohrspitze (4) drei Hauptschneiden (4a) hat, die in Blickrichtung parallel zur Drehachse (2) jeweils einen Hauptschneidenflugkreis (7) erreichen, wobei der Hauptschneidenflugkreis (7) einen durch die Bohrspitze (4) herstellbaren Bohrdurchmesser definiert, wobei jede Hauptschneide (4a) eine Hauptschneidenspanfläche (4b) hat, die jeweils mit einer Spannut (5) von den Spannuten (5) verbunden ist und in Blickrichtung parallel zur Drehachse (2) jeweils unter einem radialen Hauptschneidenspanwinkel (11) den Hauptschneidenflugkreis (7) erreicht, wobei zumindest ein radialer Hauptschneidenspanwinkel (11) von den radialen Hauptschneidenspanwinkeln (11) positiv ist.

## Beschreibung

Die vorliegende Erfindung betrifft einen Bohrgewindefräser, der entlang von einer Drehachse erstreckt ist und einen Gewindefräsabschnitt sowie eine an den Gewindefräsabschnitt anschließende Bohrspitze hat, wobei der Gewindefräsabschnitt drei Spannuten und mehrere Gewindefräszähne hat, wobei die Bohrspitze drei Hauptschneiden hat, die in Blickrichtung parallel zur Drehachse jeweils einen Hauptschneidenflugkreis erreichen, wobei der Hauptschneidenflugkreis einen durch die Bohrspitze herstellbaren Bohrdurchmesser definiert, wobei jede Hauptschneide eine Hauptschneidenspanfläche hat, die jeweils mit einer Spannut von den Spannuten verbunden ist und in Blickrichtung parallel zur Drehachse jeweils unter einem radialen Hauptschneidenspanwinkel den Hauptschneidenflugkreis erreicht.

Aus der US 4,651,374 A ist ein zweischneidiger Bohrgewindefräser bekannt. Mit dem bekannten Bohrgewindefräser ist es möglich, zunächst eine, im Allgemeinen zylindrische, Bohrung in ein Werkstück einzubringen. Zu diesem Zweck weist der bekannte Bohrgewindefräser zwei Bohrschneiden auf, mit denen die Bohrung hergestellt werden kann. Wurde die Bohrung eingebracht, wird der bekannte Bohrgewindefräser radial zugestellt, also aus dem Zentrum der Bohrung in eine Stellung parallel zur Bohrungsachse verschoben. Am Schaft des bekannten Bohrgewindefräsers sind Fräszähne angeordnet, mit denen dann mittels Zirkulargewindefräsen in die Bohrung ein Gewinde eingebracht werden kann. Die Fräszähne greifen dabei gemeinsam in die Bohrungswand ein, wobei unter Drehung des bekannten Bohrgewindefräsers und unter gleichzeitiger Ausführung einer Schraubenbewegung des bekannten Bohrgewindefräsers das Gewinde gefertigt wird.

Werden langspanende Materialien, wie zum Beispiel Aluminium-Knetlegierungen, mit dem bekannten Bohrgewindefräser bearbeitet, treten Probleme auf, weil die beim Bohren erzeugten Späne so lang sind, dass sie bald nicht mehr ausreichend aus der Bohrung abtransportiert werden können. In der Folge kontaktieren diese Späne die Fräszähne und setzen sich mitunter zwischen den Fräszähnen fest, wodurch die Fräszähne beschädigt werden. Außerdem besteht bei dem bekannten Bohrgewindefräser das Bedürfnis, die Vorschubgeschwindigkeit beim Bohren zu erhöhen.

Die Aufgabe der vorliegenden Erfindung besteht darin, einen Bohrgewindefräser bereitzustellen, der bei der Bearbeitung von langspanenden Materialien eine längere Standzeit und größere Vorschubgeschwindigkeit hat.

Die Aufgabe der vorliegenden Erfindung wird gelöst durch den Gegenstand von Anspruch 1. Vorteilhafte Weiterbildungen der Erfindung sind den abhängigen Ansprüchen, die untereinander frei kombinierbar sind, der Beschreibung, den Ausführungsbeispielen und der Zeichnung zu entnehmen.

Der Bohrgewindefräser ist entlang von einer Drehachse erstreckt und hat einen Gewindefräsabschnitt sowie eine an den Gewindefräsabschnitt anschließende Bohrspitze, wobei der Gewindefräsabschnitt drei Spannuten und mehrere Gewindefräszähne hat, wobei die Bohrspitze drei Hauptschneiden hat, die in Blickrichtung parallel zur Drehachse jeweils einen Hauptschneidenflugkreis erreichen, wobei der Hauptschneidenflugkreis einen durch die Bohrspitze herstellbaren Bohrdurchmesser definiert, wobei jede Hauptschneide eine Hauptschneidenspanfläche hat, die jeweils mit einer Spannut von den Spannuten verbunden ist und in Blickrichtung parallel zur Drehachse jeweils unter einem radialen Hauptschneidenspanwinkel den Hauptschneidenflugkreis erreicht, wobei zumindest ein radialer Hauptschneidenspanwinkel von den radialen Hauptschneidenspanwinkeln positiv ist.

Durch den zumindest einen positiven radialen Hauptschneidenspanwinkel werden die Späne beim Bohren im Bereich von der Bohrspitze stärker gestaucht und selbst bei der Bearbeitung von langspanenden Materialien gebrochen. Die Späne können demzufolge besser aus dem Bereich der Bohrspitze abtransportiert werden, was die Standzeit und auch die Vorschubgeschwindigkeit erhöht, weil beim Bohrgewindefräsen zumindest weniger oder gar nicht mehr entspant werden muss. Die Vorschubgeschwindigkeit wird zusätzlich dadurch erhöht, dass die Bohrspitze drei Hauptschneiden hat. Das gegenüber zwei Hauptschneiden größere Spanaufkommen bei drei Hauptschneiden wird durch den verbesserten Spanbruch besser bewältigt, indem die Späne kürzer gebrochen werden.

Vorzugsweise ist der radiale Hauptschneidenspanwinkel von jeder Hauptschneidenspanfläche positiv, weil dadurch die beschriebenen Vorteile an allen drei Hauptschneiden realisiert werden.

Der radiale Hauptschneidenspanwinkel ist der üblichen Konvention folgend definiert. So hat der radiale Hauptschneidenspanwinkel einen ersten Winkelschenkel, der eine Tangente von der Hauptschneidenspanfläche ist, wo die Hauptschneidenspanfläche den Hauptschneidenflugkreis in Blickrichtung parallel zur Drehachse berührt. Der radiale Hauptschneidenspanwinkel hat einen zweiten Winkelschenkel, der so orientiert ist, dass seine bezüglich der Drehachse radiale Verlängerung die Drehachse senkrecht zu ihr durchstoßen würde.

Der Hauptschneidenspanwinkel wird dabei in Blickrichtung parallel zur Drehachse aufseiten der Drehachse bemessen und ist der üblichen Konvention folgend positiv, wenn der zweite Winkelschenkel bezüglich einer schneidaktiven Drehrichtung von der Bohrspitze der Hauptschneidenspanfläche voraneilt, wo die Hauptschneidenspanfläche von ihrer Berührung mit dem Hauptschneidenflugkreis kommend nach innen von der Bohrspitze zunächst erstreckt ist, und negativ, wenn der zweite Winkelschenkel der Hauptschneidenspanfläche entsprechend nacheilen würde.

Der Gewindefräsabschnitt erzeugt beim Zirkularfräsen, das zeitlich nach dem Bohren mit der Bohrspitze erfolgt, ein Gewinde in einer durch die Bohrspitze erzeugten Bohrungswandung.

Gemäß einer Weiterbildung von dem Bohrgewindefräser liegt der zumindest eine positive radiale Hauptschneidenspanwinkel im Bereich von 3° bis 12°, vorzugsweise von 5° bis 10°. Wenn der zumindest eine positive radiale Hauptschneidenspanwinkel im Bereich von 3° bis 12°, vorzugsweise von 5° bis 10°, liegt, werden die Späne besonders kurz gebrochen, zugleich ist die Hauptschneide gegenüber Schneidkantenausbrüchen hinreichend stabil, wenn langspanende Materialien bearbeitet werden.

Vorzugsweise ist der radiale Hauptschneidenspanwinkel von jeder Hauptschneidenspanfläche positiv und liegt im Bereich von 3° bis 12°, vorzugsweise von 5° bis 10°. Vorzugsweise sind die radialen Hauptschneidenspanwinkel betragsmäßig gleich groß.

Gemäß einer Weiterbildung von dem Bohrgewindefräser erreicht zumindest die Hauptschneidenspanfläche von den Hauptschneidenspanflächen, die in Blickrichtung parallel zur Drehachse den Hauptschneidenflugkreis unter dem zumindest einen positiven radialen Hauptschneidenspanwinkel erreicht, in Blickrichtung parallel zur Drehachse den Hauptschneidenflugkreis konkav gekrümmt. Die konkav gekrümmte Hauptschneidenspanfläche zieht den Span beim Bohren in die Spannut hinein, so dass die Bruchstücke vom Span sehr schnell von dem Eingriff der Hauptschneide wegtransportiert wird. Vorzugsweise ist jede Hauptschneidenspanfläche in Blickrichtung parallel zur Drehachse konkav gekrümmt. Vorzugsweise erreicht jede Hauptschneidenspanfläche von den Hauptschneidenspanflächen in Blickrichtung parallel zur Drehachse konkav gekrümmt den Hauptschneidenflugkreis.

Gemäß einer Weiterbildung von dem Bohrgewindefräser erreicht zumindest die Hauptschneide von den Hauptschneiden, deren Hauptschneidenspanfläche in Blickrichtung parallel zur Drehachse den Hauptschneidenflugkreis unter dem zumindest einen positiven radialen Hauptschneidenspanwinkel erreicht, in Blickrichtung senkrecht zur Drehachse den Hauptschneidenflugkreis angefast und bildet so eine angefaste Hauptschneide. Die angefaste Hauptschneide macht die Bohrspitze in axialer Richtung bezüglich der Drehachse kürzer und stabiler und sorgt zusätzlich dafür, dass keine oder zumindest weniger Ausbrüche an der Hauptschneide im Bereich des Hauptschneidenflugkreises entstehen. Vorzugsweise ist jede Hauptschneide von den Hauptschneiden analog angefast.

Gemäß einer Weiterbildung von dem Bohrgewindefräser ist die angefaste Hauptschneide unter einem Fasenwinkel im Bereich von 55° bis 65° angefast, wobei der Fasenwinkel in einem Längsschnitt durch die angefaste Hauptschneide, wo sie angefast ist, und die Drehachse aufgespannt ist, wobei der Längsschnitt die angefaste Hauptschneide und die Drehachse enthält, wobei der Fasenwinkel aufseiten der Drehachse bemessen ist. Wenn der Fasenwinkel im Bereich von 55° bis 65° liegt, werden die Fräskräfte beim Zirkularfräsen besonders gut reduziert. Vorzugsweise ist jede Hauptschneide unter einem Fasenwinkel im Bereich von 55° bis 65° analog angefast.

Gemäß einer Weiterbildung von dem Bohrgewindefräser hat die Bohrspitze drei Ausspitzungen durch die jeweils eine Zentrumsschneide von der Bohrspitze gebildet wird, wobei jede Zentrumsschneide von den Zentrumsschneiden jeweils eine Hauptschneide von den Hauptschneiden unter einem Kantenwinkel erreicht, wobei der Kantenwinkel jeweils in Blickrichtung parallel zur Drehachse jeweils von der Zentrumsschneide und der Hauptschneide dort aufgespannt ist, wobei die Zentrumsschneide die Hauptschneide erreicht, wobei zumindest ein Kantenwinkel von den Kantenwinkeln ein stumpfer Kantenwinkel ist.

Die drei Ausspitzungen sorgen dafür, dass die Bohrspitze einen pyramidenförmigen Querschneidenbereich hat, der das Anbohrverhalten von der Bohrspitze verbessert. Der Erstkontakt von einem zu bearbeitenden Material und der Bohrspitze findet dadurch präziser statt. Sobald die Bohrspitze in das Material eindringt, wirken die Prozesskräfte auf die Kanten der Querschneiden von dem pyramidenförmigen Querschneidenbereich und unterstützen zusätzlich die Selbstzentrierungsfähigkeit der Bohrspitze. Ein Abdrängen kann somit selbst auf unebenen Oberflächen vermieden werden.

Die Kantenwinkel haben jeweils einen ersten Winkelschenkel, der eine Tangente von der Zentrumsschneide ist, wo die Zentrumsschneide einen bezüglich der Zentrumsschneiden definierten Zentrumsschneidenflugkreis erreicht; der Zentrumsschneidenflugkreis wird von der Drehachse zentral durchstoßen. Die Kantenwinkel haben jeweils einen zweiten Winkelschenkel, der eine Tangente von der Hauptschneide ist, wo die Hauptschneide den Zentrumsschneidenflugkreis erreicht. Die Kantenwinkel sind aufseiten einer den Zentrumsschneiden jeweils zugeordneten, stirnseitigen Freifläche der Bohrspitze bemessen.

Der stumpfe Kantenwinkel liegt, weil er stumpf ist, folglich im Bereich von größer 90° bis kleiner 180°, vorzugsweise von 140° bis 160°. Der stumpfe Kantenwinkel verbessert den Spanbruch am Übergang von der Hauptschneide zu der Zentrumsschneide.

Gemäß einer Weiterbildung von dem Bohrgewindefräser erreicht zumindest eine Zentrumschneide von den Zentrumsschneiden in Blickrichtung parallel zur Drehachse die Hauptschneide von den Hauptschneiden unter einer geraden Erstreckung, deren Hauptschneidenspanfläche in Blickrichtung parallel zur Drehachse den Hauptschneidenflugkreis unter dem zumindest einen positiven radialen Hauptschneidenspanwinkel erreicht. Die zumindest eine gerade Zentrumschneide lässt sich durch Schleifen von der Bohrspitze besonders einfach und damit kostengünstig herstellen und sorgt zugleich für eine besonders präzise Zentrierung von der Bohrspitze.

Die Zentrumsschneiden von den Zentrumsschneiden erreichen in Blickrichtung parallel zur Drehachse üblicherweise einen Zentrumsschneidenflugkreis, der von der Drehachse zentral durchstoßen wird und einen kleineren Durchmesser hat als der Hauptschneidenflugkreis.

Die Spannuten erreichen üblicherweise in Blickrichtung parallel zur Drehachse in radialer Richtung von außen nach radial innen einen Kernkreis, wobei der Kernkreis von der Drehachse zentral durchstoßen wird. Der Bohrgewindefräser hat damit üblicherweise einen Hauptschneidenflugkreis und einen Kernkreis, wobei der Durchmesser vom Kernkreis üblicherweise zumindest 20 % bis maximal 40 % vom Durchmesser des Hauptschneidenflugkreises beträgt, vorzugsweise 25 % bis 35 %. Weil die Späne durch den zumindest einen positiven radialen Hauptschneidenspanwinkel besser gebrochen werden, kann der Durchmesser vom Kernkreis bis maximal 40 % vom Durchmesser des Hauptschneidenflugkreises betragen, weil auch dann noch das Volumen der Spannuten wegen des kurzen Spanbruchs ausreicht, um die Späne abzutransportieren. Eine Vergrößerung des Durchmessers vom Kernkreis ist wünschenswert, weil sich dadurch die Stabilität vom Gewindefräsabschnitt verbessert, was auch zur Erhöhung der Vorschubgeschwindigkeit beiträgt.

Gemäß einer Weiterbildung von dem Bohrgewindefräser knickt zumindest die Hauptschneide von den Hauptschneiden, deren Hauptschneidenspanfläche in Blickrichtung parallel zur Drehachse den Hauptschneidenflugkreis unter dem zumindest einen positiven radialen Hauptschneidenspanwinkel erreicht, in Blickrichtung parallel zur Drehachse von einer Zentrumsschneide der Zentrumsschneiden unter einer Kantenbildung ab. Dadurch brechen die Späne noch leichter und es wird noch besser vermieden, dass die Späne als ein relativ breites gewendeltes Band anfallen, das sich in den Spannuten und/oder den Gewindefräszähnen festsetzen kann. Vorzugsweise knickt jede Hauptschneide von den Hauptschneiden analog von einer Zentrumsschneide der Zentrumsschneiden ab.

Gemäß einer Weiterbildung von dem Bohrgewindefräser steigt zumindest die Spannut von den Spannuten, mit der die Hauptschneidenspanfläche verbunden ist, die in Blickrichtung parallel zur Drehachse unter dem zumindest einen positiven radialen Spanwinkel den Hauptschneidenflugkreis erreicht, unter einem Steigungswinkel an der Drehachse gewendelt auf, wobei der Steigungswinkel im Bereich von 5° bis 25°, vorzugsweise von 10° bis 20°, liegt, was einen bevorzugten Steigungswinkel von 15° jeweils einschließt. Die gewendelte Spannut verbessert den bezüglich der Drehachse axialen Abtransport der durch die Hauptschneidenspanfläche, die in Blickrichtung parallel zur Drehachse unter dem zumindest einen positiven radialen Spanwinkel den Hauptschneidenflugkreis erreicht, gebrochenen Späne. Vorzugsweise steigt jede Spannut analog gewendelt auf. Der Steigungswinkel wird in Blickrichtung senkrecht zur Drehachse durch die Drehachse und eine Spannuttangente aufgespannt, wobei die Spannuttangente eine Tangente von einer der Spannut folgenden Kurve ist und der Steigungswinkel aufseiten der Drehachse bemessen ist. Die Kurve folgt also einem Rand von der Spannut. Der Steigungswinkel, der im Bereich von 5° bis 25°, vorzugsweise von 10° bis 20°, liegt, kann konstant oder variabel sein. Wenn der Steigungswinkel konstant ist, liegt er vorzugsweise im Bereich von 10° bis 20°, was bevorzugt 15° einschließt.

Gemäß einer Weiterbildung von dem Bohrgewindefräser erreichen die Gewindefräszähne in Blickrichtung parallel zur Drehachse den Hauptschneidenflugkreis nicht. Dadurch werden die Gewindefräszähne beim Bohren durch die Bohrspitze vor einem Werkstückkontakt geschützt. Gemäß einer Weiterbildung von dem Bohrgewindefräser sind die Bohrspitze und der Gewindefräsabschnitt eine monolithische Einheit. Dadurch wird eine einmal eingestellte Anordnung von der Bohrspitze bezüglich des Gewindefräsabschnitts besser eingehalten, zum Beispiel, indem die Bohrspitze und der Gewindefräsabschnitt durch Schleifen von einem gemeinsamen Rohmaterialstab hergestellt sind.

Gemäß einer Weiterbildung von dem Bohrgewindefräser ist jeder radiale Hauptschneidenspanwinkel von den radialen Hauptschneidenspanwinkeln positiv. Dadurch werden die bezüglich des zumindest einen positiven radialen Hauptschneidenspanwinkels beschriebenen Vorteile an den übrigen Hauptschneiden analog realisiert.

Gemäß einer Weiterbildung von dem Bohrgewindefräser liegt jeder positive radiale Hauptschneidenspanwinkel von den radialen Hauptschneidenspanwinkeln jeweils im Bereich von 3° bis 12°, vorzugsweise von 5° bis 10°. Dadurch werden die bezüglich des zumindest einen positiven radialen Hauptschneidenspanwinkels beschriebenen Vorteile bezüglich seiner bevorzugten Winkelbereiche an den übrigen Hauptschneiden analog realisiert.

Gemäß einer Weiterbildung von dem Bohrgewindefräser ist die Anzahl der Hauptschneiden von den Hauptschneiden auf drei begrenzt. Insbesondere wenn jeder radiale Hauptschneidenspanwinkel von den radialen Hauptschneidenspanwinkeln positiv ist, lässt sich mit bereits drei Hauptschneiden eine hinreichende Vorschubgeschwindigkeit erreichen. Die Herstellungskosten von dem Bohrgewindefräser gegenüber einer Herstellung mit mehr als drei Hauptschneiden lassen sich so reduzieren.

Gemäß einer Weiterbildung von dem Bohrgewindefräser ist die Anzahl der Spannuten von den Spannuten auf drei begrenzt. Insbesondere wenn jeder radiale Hauptschneidenspanwinkel von den radialen Hauptschneidenspanwinkeln positiv ist, reichen drei Spannuten aus, um die beim Bohren von langespanenden Materialien erzeugten Späne abzutransportieren, ohne dass die Gewindefräszähne einem erhöhten Kollisionsrisiko bezüglich dieser Späne ausgesetzt sind. Die Herstellungskosten von dem Bohrgewindefräser gegenüber einer Herstellung mit mehr als drei Spannuten lassen sich so reduzieren.

Gemäß einer Weiterbildung hat der Bohrgewindefräser eine interne Kühlmittelkanalstruktur, die zumindest einen Kühlmittelaustritt in der Bohrspitze aufseiten von mehreren Hauptschneidenfreiflächen, wobei jede Hauptschneidenfreifläche stirnseitig jeweils einer der Hauptschneiden zugeordnet ist, und/oder einen Kühlmittelaustritt in einer der Spannuten von den Spannuten hat. Wenn der Kühlmittelaustritt in der Bohrspitze aufseiten der Hauptschneidenfreiflächen ausgebildet und angeordnet ist, werden Späne aus einem Bohrgrund beim Bohren besser abtransportiert. Wenn der Kühlmittelaustritt in einer der Spannuten von den Spannuten ausgebildet und angeordnet ist, wird der Späneabtransport in dieser Spannut verbessert. Dementsprechend ist es besonders vorteilhaft, wenn der Kühlmittelaustritt in der Bohrspitze aufseiten der Hauptschneidenfreiflächen ausgebildet und angeordnet ist und ein weiterer Kühlmittelaustritt in einer der Spannuten von den Spannuten ausgebildet und angeordnet ist.

Gemäß einer Weiterbildung hat der Bohrgewindefräser zumindest eine Senkschneide, die an einem bezüglich der Bohrspitze rückwärtigen Ende von dem Gewindefräsabschnitt ausgebildet und angeordnet ist. Die Senkschneide erzeugt am zeitlichen Ende vom Bohren eine umlaufende Fase an einem Bohrungsrand.

Weitere Vorteile und Zweckmäßigkeiten der Erfindung ergeben sich anhand der nachfolgenden Beschreibung von einem Ausführungsbeispiel unter Bezugnahme auf die beigefügten Figuren.

Von den Figuren zeigen
- Fig. 1:: eine schematische Darstellung von einem Bohrgewindefräser in einer Seitenansicht;
- Fig. 2:: eine schematische Darstellung von dem Bohrgewindefräser gemäß Fig. 1 in einer Stirnseitenansicht;
- Fig. 3a:: eine schematische Darstellung von einem Detail aus Fig. 2;
- Fig. 3b:: eine schematische Darstellung von einem weiteren Detail aus Fig. 2;
- Fig. 4:: eine schematische Längsschnittdarstellung von einem vorderen Bereich des Bohrgewindefräsers gemäß Fig. 1.

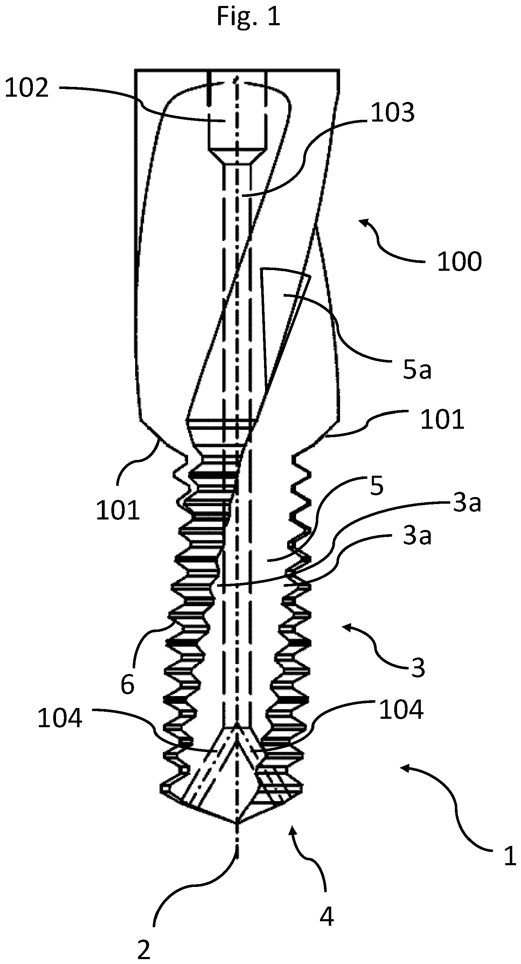

Fig. 1 zeigt eine schematische Darstellung von einem Bohrgewindefräser 1 in Blickrichtung senkrecht zu einer Drehachse 2.

Der Bohrgewindefräser 1 erstreckt sich entlang von der Drehachse 2 und hat einen Gewindefräsabschnitt 3 sowie eine an den Gewindefräsabschnitt 3 anschließende Bohrspitze 4, wobei der Gewindefräsabschnitt 3 und die Bohrspitze 4 eine monolithische Einheit sind, die aus einem Rundstab geschliffen wurde.

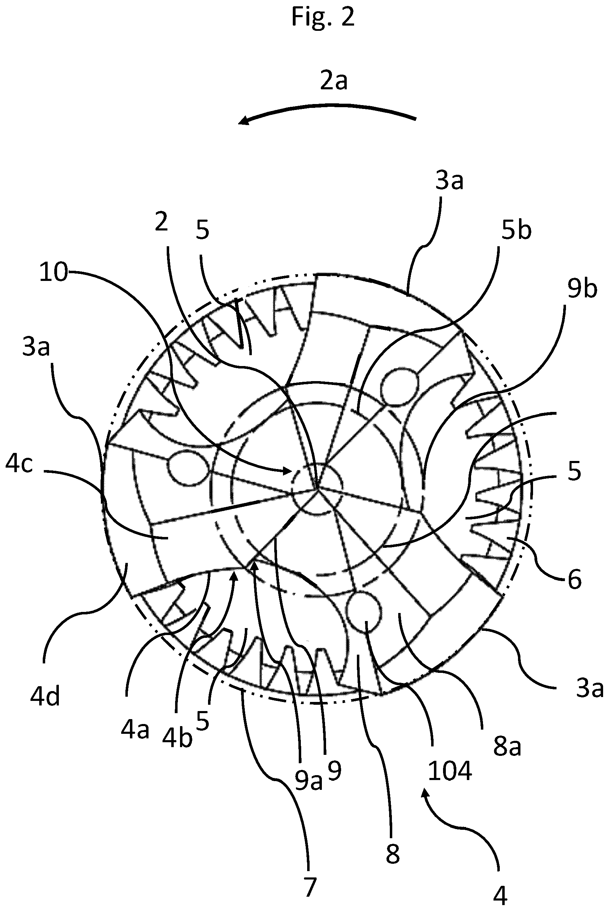

Der Gewindefräsabschnitt 3 hat drei Stege 3a, die bezüglich der Drehachse 2 jeweils gewendelt aufsteigen, wie eine Zusammenschau von Fig. 1 und Fig. 2 zeigt. Die Stege 3a bilden den Gewindefräsabschnitt 3 und die an den Gewindefräsabschnitt 3 anschließende Bohrspitze 4. In Umfangsrichtung bezüglich der Drehachse 2 sind die Stege 3a zueinander beabstandet, so dass der Gewindefräsabschnitt 3 drei Spannuten 5 hat, die unter einem Spannutwinkel 5a jeweils bezüglich der Drehachse 2 gewendelt aufsteigen und so die Bohrspitze 4 erreichen. Der Spannutwinkel 5a kann auch als Spiralwinkel bezeichnet werden.

Der Spannutwinkel 5a wird jeweils durch eine an eine Randkurve von jeder Spannut 5 angelegte Tangente und die Drehachse 2 aufgespannt; der dargestellte Spannutwinkel 5a lässt sich winkeltreu so vergrößern, dass sein Winkelschenkel aufseiten der Drehachse 2 mit der Drehachse 2 zusammenfällt, wobei der andere Winkelschenkel die angelegte Tangente ist. Der Spannutwinkel 5a beträgt exemplarisch 15° und liegt damit im Bereich von 5° bis 25° und auch im engeren Bereich von 10° bis 20°.

Der Gewindefräsabschnitt 3 hat ferner mehrere Gewindefräszähne 6, die keine Gewindesteigung haben.

Der Bohrgewindefräser 1 stellt durch die Bohrspitze 4 eine Bohrung in einem Werkstück her, indem die Bohrspitze 4 bezüglich der Drehachse 2 drehangetrieben wird und in axialer Richtung bezüglich der Drehachse 2 in ein Werkstück axial eingetaucht wird, bis eine gewünschte Bohrtiefe in dem Werkstück erreicht wird.

Der Bohrgewindefräser 1 stellt durch den Gewindefräsabschnitt 3 ein Gewinde in dem gebohrten Werkstück her, indem der Bohrgewindefräser 1 im eingetauchten Zustand in radialer Richtung bezüglich der Drehachse 2 im weiterhin drehangetriebenen Zustand in das Werkstück radial eingetaucht wird. Beim radialen Eintauchen taucht zuerst die Bohrspitze 4 radial in das gebohrte Werkstück ein, gefolgt von den Gewindefräszähnen 6 bei gleichzeitiger axialer Bewegung von dem Bohrgewindefräser 1 aus der Bohrung heraus, so dass der Bohrgewindefräser 1 unter dem Kontakt von den Gewindefräszähnen 6 mit dem gebohrten Werkstück einer Helixkurve folgend von dem gebohrten Werkstück entfernt wird und dabei eine 360° Drehung bezüglich der Drehachse 2 vollzieht. Wenn die 360° Drehung vollendet ist, wurde das Gewinde vollständig erzeugt. Der Bohrgewindefräser 1 wird, nachdem das Gewinde vollständig erzeugt wurde, radial in die Mitte der Bohrung zurückgestellt und axial aus der Bohrung entfernt.

Der Bohrgewindefräser 1 hat ferner einen Endabschnitt 100, in welchen sich die Spannuten 5 hineinerstrecken. Der Endabschnitt 100 hat ferner drei Senkschneiden 101, die eine umlaufende Fase in dem gebohrten Werkstück erzeugen, wenn der Bohrgewindefräser 1 die Bohrtiefe erreicht.

Der Bohrgewindefräser 1 hat ferner einen Einspeisekanal 102 im Endabschnitt 100. Der Einspeisekanal 102 mündet in einen Kühlmittelhauptkanal 103. Der Kühlmittelhauptkanal 103 erstreckt sich im Endabschnitt 100 und im Gewindefräsabschnitt 3. Im Gewindefräsabschnitt 3 mündet der Kühlmittelhauptkanal 103 in drei Austrittskanäle 104, die sich im Gewindefräsabschnitt 3 und in der Bohrspitze 4 erstrecken. Die Austrittskanäle 104 schließen einen aufseiten der Bohrspitze 4 bemessenen spitzen Winkel mit der Drehachse 2 jeweils ein und sorgen für einen Kühlmittelaustritt aus der Bohrspitze 4 heraus. Der Kühlmittelhauptkanal 103 und der Einspeisekanal 102 erstrecken sich jeweils parallel sowie zentrisch zur Drehachse 2.

Fig. 2 zeigt die Bohrspitze 4 in Blickrichtung parallel zur Drehachse 2 in einer Stirnseitenansicht.

Die Bohrspitze 4 hat drei Hauptschneiden 4a, die in Blickrichtung parallel zur Drehachse 2 jeweils einen Hauptschneidenflugkreis 7 konkav gekrümmt erreichen; in Fig. 2 ist aus Gründen der Übersichtlichkeit nur die Hauptschneide auf der etwa 8 Uhr-Position mit dem Bezugszeichen 4a versehen. Der Hauptschneidenflugkreis 7 wird von der Drehachse 2 zentral durchstoßen und definiert einen Bohrdurchmesser, den die Bohrspritze 4 beim beschriebenen Bohren in dem Werkstück erzeugt.

Jede Hauptschneide 4a hat eine Hauptschneidenspanfläche 4b, die jeweils mit einer der Spannuten 5 verbunden ist, wie eine Zusammenschau von Fig. 1 und Fig. 2 zeigt; in Fig. 2 ist aus Gründen der Übersichtlichkeit nur die Hauptschneidenspanfläche auf der etwa 8 Uhr-Position mit dem Bezugszeichen 4b versehen, analoges gilt für die Spannut 5. Jede Hauptschneidenspanfläche 4b folgt ihrer Hauptschneide 4a in Blickrichtung parallel zur Drehachse 2, so dass jede Hauptschneidenspanfläche 4b den Hauptschneidenflugkreis 7 ebenfalls konkav gekrümmt erreicht.

Fig. 2 zeigt ferner, dass die Bohrspitze 4 drei Ausspitzungen 8 in Form von jeweils einer geschliffenen Facette 8 hat, die jeweils in einer schneidaktiven Drehrichtung 2a der Bohrspitze 4 jeweils einer von den Hauptschneiden 4a gegenüberliegen; in Fig. 2 ist aus Gründen der Übersichtlichkeit nur die Ausspitzung im Bereich einer 6-Uhr-Position mit dem Bezugszeichen 8 versehen.

Durch jede Ausspitzung 8 wird jeweils eine Zentrumsschneide 9 gebildet, die jeweils in Blickrichtung parallel zur Drehachse 2 jeweils eine von den Hauptschneiden 4a unter einer geraden Erstreckung erreicht, so dass die Hauptschneide 4a von ihrer jeweiligen Zentrumschneide 9 unter einer Kantenbildung entgegengesetzt zur schneidaktiven Drehrichtung 2a abgeknickt, wobei die Kantenbildung auf einem Zentrumsschneidenflugkreis 9b erfolgt.

Jede Zentrumsschneide 9 hat eine Zentrumsschneidenspanfläche 9a, die jeweils eine der Hauptschneidenspanflächen 4b unter einer geraden Erstreckung in Blickrichtung parallel zur Drehachse 2 erreicht. Die Zentrumsschneiden 9 erreichen in Blickrichtung parallel zur Drehachse 2 den Zentrumsschneidenflugkreis 9b, der von der Drehachse 2 zentral durchstoßen wird und etwa 40 % vom Hauptschneidenflugkreis 7 ausmacht, was im Bereich von 30 % bis 50 % bezüglich dieses Größenverhältnisses von dem Zentrumsschneidenflugkreis 9b zum Hauptschneidenflugkreis 7 liegt und damit ein relatives Maß für die Größe der Hauptschneiden 4a bezüglich der Größe der Zentrumsschneiden 9 in Blickrichtung parallel zur Drehachse 2 ist. Die Ausspitzungen 8 reduzieren einen ursprünglich größeren Querschneidenbereich 10 der Bohrspitze 4. Der Querschneidenbereich 10 ist pyramidenförmig, wird von der Drehachse 2 zentral durchstoßen und verbindet die Zentrumsschneiden 9 miteinander.

Fig. 2 zeigt ferner, dass jede Hauptschneide 4a eine radial innere stirnseitige Freifläche 4c hat, die sie sich mit der zu ihr gehörigen Zentrumsschneide 9 teilt. Jede Hauptschneide 4a hat ferner eine radial äußere stirnseitige Freifläche 4d, indem jede Hauptschneide 4a aufseiten des Hauptschneidenflugkreises 7 angefast ist, so dass die Hauptschneide 4a im Bereich der radial äußeren Freifläche 4d in Richtung des Gewindefräsabschnitts 3 axial abknickt.

Fig. 2 zeigt ferner, dass die Bohrspitze 4 drei weitere geschliffene Freiflächen 8a hat, die jeweils an eine der Ausspitzungen 8 unter einer radialen Kantenbildung angrenzen, wobei die Austrittskanäle 104 jeweils zwischen einer der weiteren Freiflächen 8a und einer der Ausspitzungen 8 außerhalb vom Zentrumsschneidenflugkreis 9b angeordnet sind, so dass sichergestellt wird, dass der Kühlmittelaustritt in Blickrichtung parallel zur Drehachse 2 im Bereich der Spannuten 5 erfolgt.

Fig. 2 zeigt ferner, dass sich die Spannuten 5 in Blickrichtung parallel zur Drehachse 2 von radial außen nach radial innen so erstrecken, so dass die Spannuten 5 einen Kernkreis 5b erreichen, der von der Drehachse 2 zentral durchstoßen wird. Der Durchmesser vom Zentrumsschneidenflugkreis 9b ist größer als der Durchmesser vom Kernkreis 5b, so dass die Zentrumsschneiden 9 folglich in Blickrichtung parallel zur Drehachse 2 über den Kernkreis 5b hinausragen und damit zumindest abschnittsweise im Bereich der Spannuten 5 schneidaktiv sind.

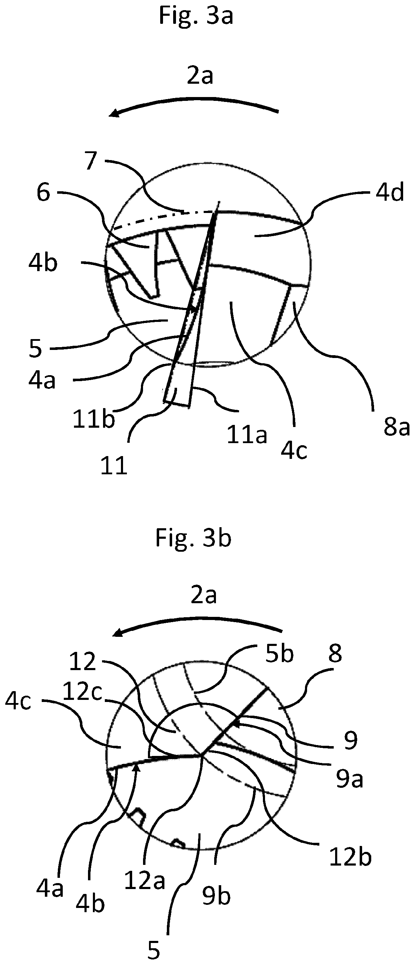

Fig. 3a zeigt ein vergrößertes Detail von der Fig. 2 dort, wo eine der Hauptschneiden 4a den Hauptschneidenflugkreis 7 konkav gekrümmt erreicht, und zwar für alle Hauptschneiden 4a exemplarisch.

Fig. 3a zeigt, dass die Hauptschneidenspanfläche 4b den Hauptschneidenflugkreis 7 unter einem radialen Hauptschneidenspanwinkel 11 erreicht.

Der radiale Hauptschneidenspanwinkel 11 hat einen ersten Winkelschenkel 11a, der eine Tangente von der Hauptschneidenspanfläche 4b ist, wo die Hauptschneidenspanfläche 4b den Hauptschneidenflugkreis 7 in Blickrichtung parallel zur Drehachse 2 berührt. Der radiale Hauptschneidenspanwinkel 11 hat einen zweiten Winkelschenkel 11b, der so orientiert ist, dass seine bezüglich der Drehachse 2 radiale Verlängerung die Drehachse 2 senkrecht zu ihr durchstoßen würde.

Der radiale Hauptschneidenspanwinkel 11 ist der üblichen Konvention folgend positiv, weil der zweite Winkelschenkel 11b bezüglich der schneidaktiven Drehrichtung 2a der Hauptschneidenspanfläche 4b voraneilt, wo die Hauptschneidenspanfläche 4b von ihrer Berührung mit dem Hauptschneidenflugkreis 7 kommend nach innen von der Bohrspitze 4 zunächst erstreckt ist. Der Hauptschneidenspanwinkel 11 beträgt exemplarisch 10°, was jeweils im Bereich von 3° bis 12° und im Bereich von 5° bis 10° liegt.

Fig. 3b zeigt ein weiteres vergrößertes Detail von der Fig. 2 dort, wo eine der Hauptschneiden 4a unter einem stumpfen Kantenwinkel 12 von einer der Zentrumsschneiden 9 abknickt, und zwar für alle Hauptschneiden 4a und Zentrumsschneiden 9 exemplarisch.

Die Spitze 12a vom stumpfen Kantenwinkel 12 liegt in Blickrichtung parallel zur Drehachse 2 auf dem Zentrumsschneidenflugkreis 9b. Der stumpfe Kantenwinkel 12 hat einen ersten Winkelschenkel 12b, der eine Tangente von der Zentrumsschneide 9 ist, wo die Zentrumsschneide 9 den Zentrumsschneidenflugkreis 9b erreicht. Der stumpfe Kantenwinkel 12 hat einen zweiten Winkelschenkel 12c, der eine Tangente von der Hauptschneide 4a ist, wo die Hauptschneide 4a den Zentrumsschneidenflugkreis 9b erreicht. Der stumpfe Kantenwinkel 12 ist aufseiten der Freifläche 4c bemessen und liegt, weil er stumpf ist, folglich im Bereich von größer 90° bis kleiner 180°, vorzugsweise von 140° bis 160°. Die Zentrumsschneide 9 eilt der Hauptschneide 4a, die sie erreicht, bezüglich der schneidaktiven Drehrichtung 2a voran.

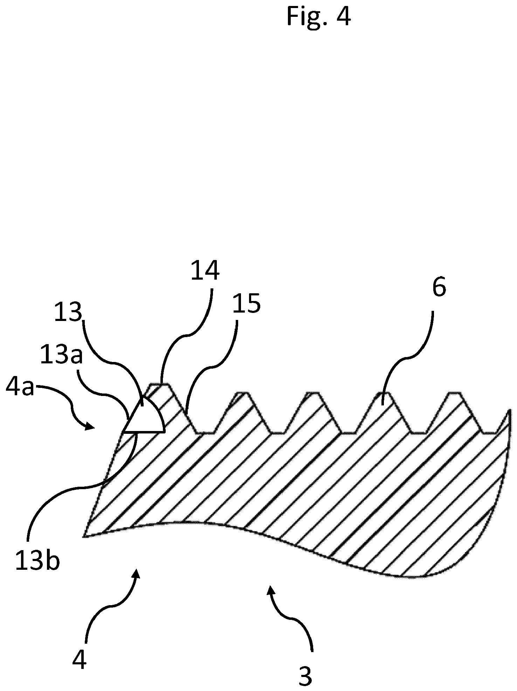

Fig. 4 zeigt einen Längsschnitt von dem Bohrgewindefräser 1 im Bereich der Bohrspitze 4 und des Gewindefräsabschnitts 3 dort, wo die Bohrspitze 4 an den Gewindefräsabschnitt 3 anschließt. Der Längsschnitt enthält die Drehachse 2. Die Blickrichtung in Fig. 4 ist senkrecht zur Drehachse 2.

In Fig. 4 ist für jede der Hauptschneiden 4a exemplarisch ersichtlich, dass die

Hauptschneiden 4a in Blickrichtung senkrecht zur Drehachse 2 unter einem Fasenwinkel 13 angefast sind und so, wie in einer Zusammenschau von Fig. 1 und Fig. 2 ersichtlich ist, den Hauptschneidenflugkreis 7 erreichen. Der Fasenwinkel 13 hat in dem Längsschnitt gemäß Fig. 4 einen ersten Winkelschenkel 13a, der eine Tangente von der Hauptschneide 4a ist, wo sie angefast ist. Der Fasenwinkel 13 hat einen zweiten Winkelschenkel 13b, der parallel zur Drehachse 2 verläuft; der Fasenwinkel 13 lässt sich winkeltreu so vergrößern, dass der zweite Winkelschenkel 13b mit der Drehachse 2 zusammenfällt, beziehungsweise, dass die

Drehachse 2 den zweiten Winkelschenkel bildet. Der Fasenwinkel 13 ist aufseiten des Gewindefräsabschnitts 3 bemessen und beträgt exemplarisch 60°, was im Bereich von 55° bis 65° liegt.

In Fig. 4 ist ferner für jede der Hauptschneiden 4a exemplarisch ersichtlich, dass jeder Hauptschneide 4a eine Bohrmantelschneide 14 zugeordnet ist, wobei sich jede Bohrmantelschneide 14 parallel zur Drehachse 2 erstreckt und in axialer Richtung bezüglich der Drehachse 2 bemessen kürzer ist als die Hauptschneide 4a, der sie zugeordnet ist.

In Fig. 4 ist ferner für jede der Bohrmantelschneiden 14 exemplarisch ersichtlich, dass die Bohrmantelschneiden 14 aufseiten des Gewindefräsabschnitts 3 an eine rückwärtige Schneide 15 von der Bohrspitze 4 anschließen.

In Fig. 4 ist ferner für jede der Hauptschneiden 4a exemplarisch ersichtlich, dass die Hauptschneiden 4a die Gewindefräszähne 6 in Richtung überragen. In anderen Worten, die Gewindefräszähne 6 erreichen den Hauptschneidenflugkreis 7 nicht.

In Fig. 4 ist ferner für jeden Gewindefräszahn 6 exemplarisch ersichtlich, dass die Gewindefräszähne 6 im Längsschnitt gemäß Fig. 4 ein trapezförmiges Profil haben.

Fig. 1, 2, 3a, 3b und 4 zeigen einen Bohrgewindefräser 1 der für die Bearbeitung von langspanenden Materialien besonders gut geeignet ist, weil die im Bereich der Bohrspitze 4 ausgebildeten drei Hauptschneiden 4a jeweils eine Hauptschneidenspanfläche 4b haben, die den Hauptschneidenflugkreis 7 unter einem positiven Hauptschneidenspanwinkel 11 erreicht und so die Späne kürzer bricht. Die jeweils konkave Form der Hauptschneidenspanflächen 4b, unter welcher sie jeweils den Hauptschneidenflugkreis 7 erreichen, ziehen die gebrochenen Späne in die Spannuten 5 stärker hinein. Indem die Hauptschneiden 4a unter dem Fasenwinkel 13 angefast sind, werden die beim Gewindefräsen erzeugten Kräfte reduziert und die Stabilität der Hauptschneide 4a im Bereich des Hauptschneidenflugkreises 7 erhöht.

Die Ausspitzungen 8 verkürzen den ansonsten größeren Querschneidenbereich 10, was die Zentrierung der Bohrspitze 4 verbessert. Indem die Kantenbildung zwischen den Zentrumsschneiden 9 und Hauptschneiden 4a unter dem stumpfen Kantenwinkel 12 erfolgt, werden die Späne stärker gebrochen. Gegenüber zwei Hauptschneiden hat der Bohrgewindefräser 1 wegen der drei Hauptschneiden 4a eine größere Vorschubgeschwindigkeit, die durch den verbesserten Spanbruch gesteigert wird.

Die bezüglich Fig. 1 und Fig. 2 beschriebene Kühlmittelversorgung und die Senkschneiden 101 verbessern zwar jeweils sowie in Kombination miteinander die Leistungsfähigkeit des Bohrgewindefräsers 1, sind jedoch jeweils sowie in Kombination miteinander optional. Damit soll nicht ausgeschlossen werden, dass auch andere Merkmale des Bohrgewindefräsers 1 optional sein können, was unter Berücksichtigung des Einsatzes beim Bohren und/oder Gewindefräsen und der dabei benötigten Eigenschaften im Einzelfall zu beurteilen ist.

## Patentansprüche

1. Bohrgewindefräser (1), der entlang von einer Drehachse (2) erstreckt ist und einen Gewindefräsabschnitt (3) sowie eine an den Gewindefräsabschnitt (3) anschließende Bohrspitze (4) hat, wobei der Gewindefräsabschnitt (3) drei Spannuten (5) und mehrere Gewindefräszahn (6) hat, wobei die Bohrspitze (4) drei Hauptschneiden (4a) hat, die in Blickrichtung parallel zur Drehachse (2) jeweils einen Hauptschneidenflugkreis (7) erreichen, wobei der Hauptschneidenflugkreis (7) einen durch die Bohrspitze (4) herstellbaren Bohrdurchmesser definiert, wobei jede Hauptschneide (4a) eine Hauptschneidenspanfläche (4b) hat, die jeweils mit einer Spannut (5) von den Spannuten (5) verbunden ist und in Blickrichtung parallel zur Drehachse (2) jeweils unter einem radialen Hauptschneidenspanwinkel (11) den Hauptschneidenflugkreis (7) erreicht, wobei zumindest ein radialer Hauptschneidenspanwinkel (11) von den radialen Hauptschneidenspanwinkeln (11) positiv ist.

2. Bohrgewindefräser (1) nach Anspruch 1, wobei der zumindest eine positive radiale Hauptschneidenspanwinkel (11) im Bereich von 3° bis 12°, vorzugsweise von 5° bis 10°, liegt.

3. Bohrgewindefräser (1) nach einem der vorhergehenden Ansprüche, wobei zumindest die Hauptschneidenspanfläche (4b) von den Hauptschneidenspanflächen (4b), die in Blickrichtung parallel zur Drehachse (2) den Hauptschneidenflugkreis (7) unter dem zumindest einen positiven radialen Hauptschneidenspanwinkel (11) erreicht, in Blickrichtung parallel zur Drehachse (2) den Hauptschneidenflugkreis (7) konkav gekrümmt erreicht.

4. Bohrgewindefräser (1) nach einem der vorhergehenden Ansprüche, wobei zumindest die Hauptschneide (4a) von den Hauptschneiden (4a), deren Hauptschneidenspanfläche (4b) in Blickrichtung parallel zur Drehachse (2) den Hauptschneidenflugkreis (7) unter dem zumindest einen positiven radialen Hauptschneidenspanwinkel (4b) erreicht, in Blickrichtung senkrecht zur Drehachse (2) den Hauptschneidenflugkreis (7) angefast erreicht und so eine angefaste Hauptschneide (4a) bildet.

5. Bohrgewindefräser (1) nach Anspruch 4, wobei die angefaste Hauptschneide (4a) unter einem Fasenwinkel (13) im Bereich von 55° bis 65° angefast ist, wobei der Fasenwinkel (13) in einem Längsschnitt durch die angefaste Hauptschneide (4a), wo sie angefast ist, und die Drehachse (2) aufgespannt ist, wobei der Längsschnitt die angefaste Hauptschneide (4a) und die Drehachse (2) enthält, wobei der Fasenwinkel (13) aufseiten der Drehachse (2) bemessen ist.

6. Bohrgewindefräser (1) nach einem der vorhergehenden Ansprüche, wobei die Bohrspitze (4) drei Ausspitzungen (8) hat, durch die jeweils eine Zentrumsschneide (9) von der Bohrspitze (4) gebildet wird, wobei jede Zentrumsschneide (9) von den Zentrumsschneiden (9) jeweils eine Hauptschneide (4a) von den Hauptschneiden (4a) unter einem Kantenwinkel (12) erreicht, wobei der Kantenwinkel (12) jeweils in Blickrichtung parallel zur Drehachse (2) jeweils von der Zentrumsschneide (9) und der Hauptschneide (4a) dort aufgespannt ist, wobei die Zentrumsschneide (9) die Hauptschneide (4a) erreicht, wobei zumindest ein Kantenwinkel (12) von den Kantenwinkeln (12) ein stumpfer Kantenwinkel (12) ist.

7. Bohrgewindefräser (1) nach Anspruch 6, wobei zumindest eine Zentrumschneide (9) von den Zentrumsschneiden (9) in Blickrichtung parallel zur Drehachse (2) die Hauptschneide (4a) von den Hauptschneiden (4a) unter einer geraden Erstreckung erreicht, deren Hauptschneidenspanfläche (4b) in Blickrichtung parallel zur Drehachse (2) den Hauptschneidenflugkreis (7) unter dem zumindest einen positiven radialen Hauptschneidenspanwinkel (11) erreicht.

8. Bohrgewindefräser (1) nach Anspruch 6 oder 7, wobei zumindest die Hauptschneide (4a) von den Hauptschneiden (4a), deren Hauptschneidenspanfläche (4b) in Blickrichtung parallel zur Drehachse (2) den Hauptschneidenflugkreis (7) unter dem zumindest einen positiven radialen Hauptschneidenspanwinkel (11) erreicht, in Blickrichtung parallel zur Drehachse (2) von einer Zentrumsschneide (9) der Zentrumsschneiden (9) unter einer Kantenbildung abknickt.

9. Bohrgewindefräser (1) nach einem der vorhergehenden Ansprüche, wobei zumindest die Spannut (5) von den Spannuten (5), mit der die Hauptschneidenspanfläche (4b) verbunden ist, die in Blickrichtung parallel zur Drehachse (2) den Hauptschneidenflugkreis (7) unter dem zumindest einen positiven radialen Hauptschneidenspanwinkel (11) erreicht, unter einem Steigungswinkel (5a) an der Drehachse (2) gewendelt aufsteigt, wobei der Steigungswinkel (5a) im Bereich von 5° bis 25°, vorzugsweise von 10° bis 20°, liegt.

10. Bohrgewindefräser (1) nach einem der vorhergehenden Ansprüche, wobei die Gewindefräszähne (6) in Blickrichtung parallel zur Drehachse (2) den Hauptschneidenflugkreis (7) nicht erreichen.

11. Bohrgewindefräser (1) nach einem der vorhergehenden Ansprüche, wobei die Bohrspitze (4) und der Gewindefräsabschnitt (3) eine monolithische Einheit (3, 4) sind.

12. Bohrgewindefräser (1) nach einem der vorhergehenden Ansprüche, wobei jeder radiale Hauptschneidenspanwinkel (11) von den radialen Hauptschneidenspanwinkeln (11) positiv ist.

13. Bohrgewindefräser (1) nach Anspruch 12, wobei jeder positive radiale Hauptschneidenspanwinkel (11) von den radialen Hauptschneidenspanwinkeln (11) jeweils im Bereich von 3° bis 12°, vorzugsweise von 5° bis 10°, liegt.

14. Bohrgewindefräser (1) nach einem der vorhergehenden Ansprüche, wobei die Anzahl der Hauptschneiden (4a) von den Hauptschneiden (4a) auf drei begrenzt ist.

15. Bohrgewindefräser (1) nach einem der vorhergehenden Ansprüche, wobei die Anzahl der Spannuten (5) von den Spannuten (5) auf drei begrenzt ist.
